**Europäisches Patentamt**

(19) **European Patent Office**

**Office européen des brevets**

(11) Veröffentlichungsnummer: **0 010 655**
**B1**

(12) # EUROPÄISCHE PATENTSCHRIFT

(45) Veröffentlichungstag der Patentschrift:
20.01.82

(51) Int. Cl.³: **C 01 B 33/18,** B 01 J 20/10,
C 08 K 3/36, C 09 C 1/30

(21) Anmeldenummer: 79103880.5

(22) Anmeldetag: 10.10.79

(54) Verfahren zum Erhöhen des Schüttgewichts von Siliciumdioxyd und eine Verwendung des erfindungsgemäss behandelten Siliciumdioxyds.

(30) Priorität: 12.10.78 DE 2844459

(43) Veröffentlichungstag der Anmeldung:
14.05.80 Patentblatt 80/10

(45) Bekanntmachung des Hinweises auf die Patenterteilung:
20.01.82 Patentblatt 82/3

(84) Benannte Vertragsstaaten:
**BE DE FR GB IT NL SE**

(56) Entgegenhaltungen:
**DE-A-1 592 942**
**DE-A-1 908 414**
**DE-A1-2 434 182**
**DE-A1-2 628 975**
**DE-A1-2 724 976**
**DE-B-1 168 874**
**DE-B-2 344 388**
**DE-C-893 497**
**DE-C-1 129 459**
**GB-A-1 288 404**
**Seifen–Öle–Fette–Wachse, Band 100,**
**Nr. 4, 1974, Augsburg**
**R. Kreuter «Volumenverminderung von Schüttgütern beim Abfüllen mittels eines Durchlaufverdichters»**
**Seiten 101 bis 103**

(73) Patentinhaber: **WACKER-CHEMIE GMBH,
Prinzregentenstrasse 22, D-8000 München 22 (DE)**

(72) Erfinder: **Kratel, Günter, Dr. Dipl.-Chem.,
Alpenblickstrasse 10, D-8961 Durach-Bechen (DE)**
Erfinder: **Dummer, Gerhard, Dipl.-Ing., Alzweg 9,
D-8261 Burgkirchen/Alz (DE)**
Erfinder: **Niessner, Peter, Bahnhofstrasse 2,
D-8961 Sulzberg (DE)**
Erfinder: **Grune, Burkhard, Bachstrasse 14,
D-8263 Burghausen (DE)**
Erfinder: **Stohr, Günter, Dr. Dipl.-Chem.,
Stuibenstrasse 14, D-8961 Durach-Bechen (DE)**

## Verfahren zum Erhöhen des Schüttgewichts von Siliciumdioxyd und eine Verwendung des erfindungsgemäss behandelten Siliciumdioxyds

Es ist bereits bekannt, das Schüttgewicht von Siliciumdioxyd mit einer Oberfläche von z.B. 250 m²/g mittels Unterdruck an gasdurchlässiger Fläche, wobei zu den gasdurchlässigen Flächen auch Filterflächen gehören, zu erhöhen. Hierzu wird z.B. auf DE-C-11 29 459, ausgegeben 29. August 1963, Deutsche Gold- und Silber-Scheideanstalt, vormals Roessler, verwiesen. Gegenüber den vorbekannten Verfahren zum Erhöhen des Schüttgewichts von Siliciumdioxyd mit einer Oberfläche von mindestens 50 m²/g hat das erfindungsgemässe Verfahren insbesondere die Vorteile, dass das danach behandelte Siliciumdioxyd ein noch geringeres Volumen hat und/oder beim Endverbraucher keine oder geringere Verluste und physiologische Belästigung durch Staubentwicklung aus dem Siliciumdioxyd entstehen, ohne dass durch das erfindungsgemässe Verfahren die Struktur des Siliciumdioxyds in nachteiliger Weise verändert wird, und/oder dass das erfindungsgemäss behandelte Siliciumdioxyd als Füllstoff in polymeren Massen rascher in diese Massen eingearbeitet werden kann und ihnen stärkere Thixotropie und höhere Standfestigkeit und den aus diesen Massen hergestellten Formkörpern und Überzügen glattere Oberflächen und besonders hohe Weiterreissfestigkeit verleiht.

So war auch aufgrund des Artikels «Volumenverminderung von Schüttgütern beim Abfüllen mittels eines Durchlaufverdichters» von R. Kreuter in «Seifen-Öle-Fette-Wachse», 100. Jahrgang, Nr. 4, 1979, Seite 101 bis 103, nicht zu erwarten, dass erfindungsgemäss verdichtetes Siliciumdioxyd, das vor der Verdichtung viel niedrigeres Schüttgewicht aufweist, als die in dem Artikel erwähnten Siliciumdioxydarten, die durch das weiter unten folgende Beispiel 3 und Vergleichsversuch 3 belegten Vorteile gegenüber durch Pressen verdichtetem Siliciumdioxyd mit sogar höherem Schüttgewicht nach dem Pressen haben würde. Gemäss diesem Artikel werden z.B. Kieselsäure mit einem Schüttgewicht von 120 g/l oder «Silica» mit einem Schüttgewicht von 200 g/l dadurch verdichtet, dass sie unter Bewegung mittels einer Transportschnecke mit gleichbleibender Gewindeneigung, deren Längsachse parallel zur Filterfläche angeordnet ist, Unterdruck ausgesetzt werden.

Gegenstand der Erfindung ist ein Verfahren zum Erhöhen des Schüttgewichts von Siliciumdioxyd mit einer Oberfläche von mindestens 50 m²/g mittels Unterdruck an einer Filterfläche, wobei Siliciumdioxyd mit einem Schüttgewicht von 10 bis 30 g/l, unter Bewegung dieses Siliciumdioxyds mittels einer Transportschnecke, deren Längsachse parallel zur Filterfläche angeordnet ist und in Förderrichtung abnehmende Gewindesteigung hat, Unterdruck ausgesetzt wird.

Die hier in der Beschreibung und mindestens einem der Patentansprüche angegebenen Werte der Oberfläche des erfindungsgemäss zu behandelnden Siliciumdioxyds sind jeweils bestimmt durch Stickstoffadsorption nach der im ASTM Special Technical Publication Nr. 51, 1941, Seite 95 ff., beschrieben und meist als «BET» bezeichneten Methode, also BET-Werte.

Das Schüttgewicht ist jeweils bestimmt gemäss DIN/Deutsche Industrie Norm 53 468.

Als Siliciumdioxyd mit einer Oberfläche von mindestens 50 m²/g ist pyrogen erzeugtes Siliciumdioxyd (in der angelsächsischen Literatur meist als «fume silica» oder «pyrogenic silica» bezeichnet) bevorzugt. Solches Siliciumdioxyd kann z.B. durch Hydrolyse von Siliciumtetrachlorid und/oder Methyltrichlorsilan bei Temperaturen über 800 °C hergestellt werden. Weitere Beispiele für Siliciumdioxyd mit einer Oberfläche von mindestens 50 m²/g sind unter Erhaltung der Struktur entwässerte Kieselsäuregele (sogenannte «Aerogele»), Xerogele und anderes nassgefälltes Siliciumdioxyd mit einer Oberfläche von mindestens 50 m²/g.

Die Oberfläche des Siliciumdioxyds mit einer Oberfläche von mindestens 50 m²/g kann, bevor dieses Siliciumdioxyd bei dem erfindungsgemässen Verfahren eingesetzt wird, z.B. durch Umsetzung mit Organosiliciumverbindungen, wie Trimethyläthoxysilan, Alkoholen oder Fettsäuren, hydrophobiert oder in anderer Weise, z.B. durch Umsetzung mit Siliciumtetrachlorid oder Aminen bzw. Aminoalkoholen, oder thermischer Entfernung von Si-gebundenen Hydroxylgruppen, verändert worden sein.

Falls erwünscht, können Gemische aus verschiedenen Siliciumdioxydarten bei dem erfindungsgemässen Verfahren eingesetzt werden.

Vorzugsweise hat das bei dem erfindungsgemässen Verfahren eingesetzte Siliciumdioxyd eine Oberfläche von höchstens 400 m²/g, insbesondere eine Oberfläche von 100 bis 300 m²/g.

Bei dem erfindungsgemässen Verfahren wird zumindest in Richtung auf die Filterfläche und vorzugsweise auch in anderen Richtungen oder anschliessend an das erfindungsgemässe Verfahren keinerlei oder wenigstens praktisch kein Druck durch eine mechanische Vorrichtung auf das Siliciumdioxyd ausgeübt. Durch die Transportschnecke, deren Längsachse parallel zur Filterfläche angeordnet ist, wird das erfindungsgemäss eingesetzte Siliciumdioxyd, vielmehr lediglich an die Filterfläche drucklos oder praktisch drucklos herangeführt, Gas, das in offenen Hohlräumen der Siliciumdioxydteilchen und zwischen diesen Teilchen enthalten ist, durch die Filterfläche mittels des Unterdrucks abgesaugt, das Siliciumdioxyd wieder von der Filterfläche weggeführt sowie durchmischt und nach meist nochmaliger Wiederholung dieses Heran- und Wegführens sowie Durchmischens endgültig von der Filterfläche entfernt.

Die bei dem erfindungsgemässen Verfahren verwendete Filterfläche kann aus beliebigem Material bestehen, aus dem auch bisher Filterflächen bestehen konnten, an denen staubförmige Güter von Gasen getrennt wurden, beispielsweise aus Gewebe aus natürlichen oder synthetischen, organischen oder anorganischen Fasern, die ggf. durch thermische oder chemische Behandlung modifiziert sein können, oder aus poröser Keramik, insbesondere aber aus Sintermetall.

Vorzugsweise hat die Filterfläche die Form eines Rohres, in dem sich die Transportschnecke dreht und das sich in einer abgeschlossenen Kammer befindet, die mit einer Vakuumpumpe verbunden ist.

Der bei dem erfindungsgemässen Verfahren angewendete Druck, also der Unterdruck, dem das Siliciumdioxyd mit einer Oberfläche von mindestens 50 m²/g bei dem erfindungsgemässen Verfahren ausgesetzt wird, beträgt vorzugsweise 300 bis 900 mbar (abs.).

Das erfindungsgemässe Verfahren wird vorzugsweise bei Raumtemperatur, also bei 18° bis 25°C, durchgeführt. Falls erwünscht, kann es aber auch bei niedrigeren oder höheren Temperaturen, z.B. bei 100° bis 250°C, durchgeführt werden. Der Durchsatz beträgt vorzugsweise 200 bis 350 kg je Stunde und m² Filterfläche.

Vorzugsweise verlässt das Siliciumdioxyd am Ende der Transportschnecke die Vorrichtung durch eine Austrittsöffnung, deren Durchmesser veränderlich ist. Durch Verringerung des Durchmessers der Austrittsöffnung ist eine zusätzliche Erhöhung des Schüttgewichts möglich.

Vorzugsweise wird das Schüttgewicht des Siliciumdioxyds durch das erfindungsgemässe Verfahren auf 80 bis 120 g/l erhöht.

Nach dem erfindungsgemässen Erhöhen des Schüttgewichts kann das Siliciumdioxyd in üblicher Weise abgepackt werden. Vorzugsweise wird auch bei diesem Abpacken Unterdruck, insbesondere intermittierender Unterdruck, angewandt.

Das nach dem erfindungsgemässen Verfahren behandelte Siliciumdioxyd mit einer Oberfläche von mindestens 50 m²/g kann überall verwendet werden, wo auch bisher Siliciumdioxyd mit einer Oberfläche von mindestens 50 m²/g verwendet werden konnte. Beispiele für derartige Verwendungen sind die Verwendung als die Rieselfähigkeit von pulverförmigen Stoffen erhöhender Zusatz, als Verdickungsmittel von polaren und unpolaren Flüssigkeiten einschliesslich Schmiermitteln, und die Verwendung als Füllstoff in polymeren Massen für die Herstellung von Formkörpern und Überzugen und die Füllung von Leerräumen, einschliesslich Dichtungen. Bei diesen polymeren Massen kann es sich z.B. um solche auf Grundlage von Organopolysiloxan, Massen auf Grundlage von natürlichem oder synthetischem rein-organischem Kautschuk, Polymerisate oder Mischpolymerisate von Vinylchlorid, Vinylazetat, Styrol und/oder Äthylen oder Polyester oder z.B. um in Abwesenheit von Wasser lagerfähige, bei Zutritt von Wasser bei Raumtemperatur härtende Massen auf Grundlage von Polyurethanvorpolymeren oder Polysulfidvorpolymeren handeln.

Bei Massen auf Grundlage von Organopolysiloxanen kann es sich um solche handeln, die zu Elastomeren oder zu harzartigen Produkten härten. Diese Massen auf Grundlage von Organopolysiloxan können solche sein, die in der Hitze, meist bei Temperaturen über 100°C durch Kondensation oder Radikalbildung, härten oder vernetzen, oder solche sein, die als sogenannte «Zweikomponentensysteme» oder als sogenannte «Einkomponentensysteme» bei Raumtemperatur vernetzen oder härten, oder solche sein, die durch die Anlagerung von Si-gebundenem Wasserstoff an aliphatische Mehrfachbindung in Gegenwart von diese Anlagerung förderndem Katalysator, wie Platinverbindung, härten oder vernetzen.

Erfindungsgemäss behandeltes Siliciumdioxyd kann in die polymeren Massen auf die gleiche Weise, jedoch meist in kürzerer Zeit, und in den gleichen Mengen wie bisher bekanntes Siliciumdioxyd mit einer Oberfläche von mindestens 50 m²/g, beispielsweise mittels einem Planetenmischer, eingearbeitet werden.

Wie eingangs erwähnt, verleiht erfindungsgemäss behandeltes Siliciumdioxyd mit einer Oberfläche von mindestens 50 m²/g polymeren Massen besonders hohe Thixotropie und Standfestigkeit. Diese Eigenschaften sind von besonders grosser Bedeutung bei der Abwesenheit von Wasser lagerfähigen, bei Zutritt von Wasser bei Raumtemperatur zu Elastomeren härtbaren Massen auf Grundlage von Diorganopolysiloxan, also bei sogenannten Einkomponentensystemen, die vielfach zum Ausfüllen von Fugen, beispielsweise an Gebäuden, Land-, Wasser- oder Luftfahrzeugen verwendet werden. Deshalb ist Gegenstand der Erfindung auch die Verwendung von erfindungsgemäss behandeltem Siliciumdioxyd als Füllstoff in bei Abwesenheit von Wasser lagerfähigen, bei Zutritt von Wasser bei Raumtemperatur zu Elastomeren härtbaren Massen auf Grundlage von Diorganopolysiloxan.

Beispiel 1

Pyrogen erzeugtes Siliciumdioxyd, das durch Hydrolyse von Methyltrichlorsilan bei einer Temperatur über 800°C hergestellt wurde, mit einer Oberfläche von 174 m²/g und einem Schüttgewicht von 17 g/l wird unter Bewegung dieses Siliciumdioxyds mittels einer Transportschnecke mit 40 Umdrehungen je Minute, wobei der Durchmesser der Schnecke 300 mm beträgt und die Gewindesteigung dieser Schnecke entsprechend der Volumenabnahme des Siliciumdioxyds in Förderrichtung abnimmt, durch ein Rohr geführt. Dieses Rohr hat einen Durchmesser von 303 mm und ist auf einer Länge von 2000 mm als Doppelmantelgehäuse ausgeführt, dessen innerer Mantel aus einem Rohr aus Sintermetall mit einer Porenweite von 20 Mikrometer (V₂A Siperm R 20 – die Bezeichnung «Siperm» dürfte ein registriertes Warenzeichen sein – Thyssen Edelstahlwerke AG, Dortmund, BRD) besteht. Der Druck im Innenraum des Doppelmantelgehäuses beträgt 840 mbar (abs.). Das Siliciumdioxyd wird durch das Rohr in einer Menge von 400 kg je Stunde insgesamt oder 210 kg je Stunde und m² Filterfläche geführt. Nach dem Austritt aus dem Rohr durch eine Austrittsöffnung, deren Durchmesser mittels einer regelbaren Blende veränderlich ist, wobei die Blende auf einen Austrittsöffnungs-Durchmesser von 200 mm eingestellt ist, hat das Siliciumdioxyd ein Schüttgewicht von 87,5 g/l.

**Beispiel 2**

Die im Beispiel 1 beschriebene Arbeitsweise wird wiederholt mit der Abänderung, dass die Oberfläche des Siliciumdioxyds vor der erfindungsgemässen Behandlung mittels Trimethyläthoxysilan hydrophobiert wurde. Nach dem Austritt aus dem Rohr hat das Siliciumdioxyd ein Schüttgewicht von 93,0 g/l.

**Beispiel 3**

Mit einem Planetenmischer werden unter Unterdruck und Ausschluss von Wasser die folgenden Bestandteile in der Reihenfolge, in der sie angegeben sind, vermischt:

| | |
|---|---|
| 670 g | in den endständigen Einheiten je eine Si-gebundene Hydroxylgruppe enthaltendes Dimethylpolysiloxan mit einer Viskosität von etwa 75 Pa·s, |
| 200 g | durch Trimethylsiloxygruppen entblockiertes Dimethylpolysiloxan mit einer Viskosität von 100 mm²·s⁻¹, |
| 45 g | Methyltriacetoxysilan, |
| 85 g | des gemäss Beispiel 1 behandelten Siliciumdioxyds und |
| 10 g | Dibutylzinndilaurat |

Der Gesamtzeitbedarf für dieses Vermischen beträgt 30 Minuten, wobei auf das Einmischen des Siliciumdioxyds nur 50 Sekunden entfallen. Es wird eine bei Abwesenheit von Wasser lagerfähige, bei Zutritt von Wasser bei Raumtemperatur zu einem Elastomeren härtende Masse erhalten. Diese Masse ist standfest, was sich daraus ergibt, dass sie aus einer senkrechten Schiene nicht abläuft, und ergibt Elastomere mit glatter Oberfläche.

**Beispiel 4**

Die in Beispiel 3 beschriebene Arbeitsweise wird wiederholt mit der Abänderung, dass anstelle der 85 g des gemäss Beispiel 1 behandelten Siliciumdioxyds 120 g des gemäss Beispiel 2 behandelten Siliciumdioxyds verwendet werden. Auf das Einmischen des Siliciumdioxyds entfallen nur 70 Sekunden.

**Vergleichsversuch 1**

Die in Beispiel 3 beschriebene Arbeitsweise wird wiederholt mit der Abänderung, dass das gemäss Beispiel 1 eingesetzte Siliciumdioxyd ohne die in Beispiel 1 beschriebene Behandlung verwendet wird. Das Einmischen des Siliciumdioxyds benötigt 2,5 Minuten.

**Vergleichsversuch 2**

Die in Beispiel 4 angegebene Arbeitsweise wird wiederholt mit der Abänderung, dass das gemäss Beispiel 2 eingesetzte Siliciumdioxyd ohne die in Beispiel 2 angegebene Behandlung verwendet wird. Das Einmischen des Siliciumdioxyds benötigt 7 Minuten.

**Vergleichsversuch 3**

Die in Beispiel 3 angegebene Arbeitsweise wird wiederholt mit der Abänderung, dass anstelle der 85 g des gemäss Beispiel 1 behandelten Siliciumdioxyds (pH-Wert: 4,2) 85 g eines pyrogen erzeugten und gepressten Siliciumdioxyds mit einer Oberfläche von 152 m²/g, einem Schüttgewicht von 120 g/l und einem pH-Wert von 4,15 verwendet werden. Auf das Einmischen des Siliciumdioxyds entfallen zwar sogar nur 45 Sekunden. Die Masse ist jedoch nicht standfest und ergibt Elastomere mit rauher Oberfläche und einer Weiterreissfestigkeit von nur 2,8 N/mm, während Elastomere aus der Masse gemäss Beispiel 3 eine Weiterreissfestigkeit von 4,2 N/mm haben.

Das Pressen des Siliciumdioxyds erfolgte zwischen zwei gegenläufigen Walzen, wobei die eine Walze eine bei erniedrigtem Druck gehaltene, tuchbespannte Filterwalze und die andere Walze eine Metallwalze war.

**Patentansprüche**

1. Verfahren zum Erhöhen des Schüttgewichts von Siliciumdioxyd mit einer Oberfläche von mindestens 50 m²/g, wobei Siliciumdioxyd mit einem Schüttgewicht von 10 bis 30 g/l unter Bewegung dieses Siliciumdioxyds mittels einer Transportschnecke, deren Längsachse parallel zur Filterfläche angeordnet ist und in Förderrichtung abnehmende Gewindesteigung hat, Unterdruck ausgesetzt wird.

2. Verfahren nach Anspruch 1, dadurch gekennzeichnet, dass als Filterfläche eine solche verwendet wird, die die Form eines Rohres hat, in dem sich die Transportschnecke dreht und das sich in einer abgeschlossenen Kammer befindet, die mit einer Vakuumpumpe verbunden ist.

3. Verfahren nach Anspruch 2, dadurch gekennzeichnet, dass die Filterfläche aus Sintermetall besteht.

4. Verfahren nach mindestens einem der Ansprüche 1, 2 oder 3, dadurch gekennzeichnet, dass das Siliciumdioxyd am Ende der Transportschnecke die Vorrichtung durch eine Austrittsöffnung verlässt, deren Durchmesser veränderlich ist.

5. Verwendung von gemäss mindestens einem der Ansprüche 1 bis 4 hergestellten Siliciumdioxyd als Füllstoff in bei Abwesenheit von Wasser lagerfähigen, bei Zutritt von Wasser bei Raumtemperatur zu Elastomeren härtbaren Massen auf Grundlage von Diorganopolysiloxan.

**Revendications**

1. Procédé pour élever la masse volumique d'une silice présentant une surface spécifique de contact d'au moins 50 m²/g, caractérisé en ce qu'on soumet de la silice ayant une masse volumique de 10 à 30 g/l à une dépression en déplaçant cette silice à l'aide d'une vis de transport dont l'axe longitudinal est parallèle à une surface filtrante et dont le pas diminue dans le sens du déplacement de la matière.

2. Procédé selon la revendication 1, caractérisé en ce qu'on utilise comme surface filtrante une telle surface qui a la forme d'un tube dans lequel la vis de transport tourne et qui se trouve dans une chambre close reliée à une pompe à vide.

3. Procédé selon la revendication 2, caractérisé en ce que la surface filtrante consiste en du métal fritté.

4. Procédé selon l'une quelconque des revendications 1 à 3, caractérisé en ce que, à l'extrémité de la vis de transport, la silice quitte le dispositif par un orifice de sortie dont le diamètre est modifiable.

5. Application de la silice produite selon l'une quelconque des revendications 1 à 4 comme charge pour des compositions à base de diorganopolysiloxane pouvant se conserver à l'abri de l'eau et qui durcissent en donnant des élastomères en présence d'eau à la température ambiante.

**Claims**

1. Process for increasing the bulk weight of silica having a specific surface area of at least 50 m²/g, in which silica having a bulk weight of from 10 to 30 g/l is subjected to low pressure whilst being moved by means of a screw conveyor, the longitudinal axis of which is arranged parallel to the filter surface and which has a thread pitch decreasing in the direction of transport.

2. Process according to claim 1, characterised in that the filter surface used is in the form of a tube in which the screw conveyor rotates and which is arranged in a sealed chamber connected to a vacuum pump.

3. Process according to claim 2, characterised in that the filter surface consists of sintered metal.

4. Process according to at least one of claims 1, 2 or 3, characterised in that the silica leaves the device at the end of the screw conveyor through a discharge aperture the diameter of which can be altered.

5. Use of silica produced according to at least one of claims 1 to 4 as a filter in diorganopolysiloxane-based compositions that can be stored in the absence of water and that cure at room temperature in the presence of water to form elastomers.